# FASCICULE DE BREVET EUROPEEN

(11) **EP 2 184 625 B1**
(45) Date de publication et mention de la délivrance du brevet: **21.08.2013**
(21) Numéro de dépôt: 09174887.1
(22) Date de dépôt: 03.11.2009
(51) Int. Cl.: G02B 3/14

(54) **Dispositif optique à membrane déformable à actionnement perfectionné**
Optische Vorrichtung mit verformbarer Membran mit perfektionierter Auslösung
Optical device with deformable membrane with improved activation

(30) Priorité: 07.11.2008 FR 0857574
(43) Date de publication de la demande: 12.05.2010
(73) Titulaire: Commissariat à l'Énergie Atomique et aux Énergies Alternatives, 75015 Paris (FR)
(72) Inventeur: Bolis, Sébastien, 38920 Crolles (FR)
(74) Mandataire: Ilgart, Jean-Christophe

(56) Documents cités:
- FR-A1- 2 912 514
- GB-A- 2 448 238
- JP-A- 1 166 003
- JP-A- 60 220 301
- US-A1- 2007 030 573
- KUIPER S ET AL: "Variable-focus liquid lens for miniature cameras" APPLIED PHYSICS LETTERS, AIP, AMERICAN INSTITUTE OF PHYSICS, MELVILLE, NY, US, vol. 85, no. 7, 1 janvier 2004 (2004-01-01), pages 1128-1130, XP012064218 ISSN: 0003-6951

## Description

### DOMAINE TECHNIQUE

La présente invention est relative à un dispositif optique à membrane déformable piégeant un fluide et doté de moyens d'actionnement de la membrane tel une lentille à distance focale variable, une lentille à correction d'aberrations optique en optique adaptative ou même un miroir à membrane déformable.

Les lentilles liquides sont utilisables par exemple dans les téléphones portables avec fonction d'appareil photographique ou de caméra. De nombreux développements sont en cours dont notamment la fonction d'autofocus et la fonction zoom. On cherche lors de l'introduction de ces fonctions, à obtenir un temps de réponse le plus court possible. Plus globalement, on cherche à intégrer le plus possible les constituants de ces appareils photos miniatures pour réduire les coûts, l'encombrement et la consommation d'énergie. Ces appareils photos miniatures, fonctionnant dans le visible, sont connus sous la dénomination anglo-saxonne CCM pour « compact camera module ». Ces derniers sont plutôt dotés de lentilles constituées d'un ou deux liquides sur lesquels est appliquée une tension afin de modifier leur mouillabilité.

Une autre application concerne les caméras fonctionnant dans l'infrarouge (IR). L'avancement en termes d'intégration est moindre, dans la plupart des cas, les optiques sont dissociées des caméras. Plusieurs développements sont en cours dont notamment l'intégration des optiques (création d'un module caméra), l'intégration de la fonction autofocus, ... Pour l'instant, les solutions techniques associées ne sont pas connues et demandent à être définies.

Dans une application de miroir à membrane déformable, cette dernière est réfléchissante. Dans cette application le fluide peut être un gaz. On peut être amené à vouloir ajuster la distance focale du miroir et donc son rayon de courbure. Un tel miroir peut être utilisé en ophtalmologie ou en optique adaptative.

### ÉTAT DE LA TECHNIQUE ANTÉRIEURE

Les dispositifs optiques à distance focale variable tels des lentilles liquides à distance focale variable constituées d'un liquide travaillant à volume constant entre deux parois dont au moins une est mobile ont fait l'objet de plusieurs brevets, par exemple : US-B-5 917 657, US-B-6 344 930, JP-A-10-144975, JP-A-08-114 703, US-A-5 138 494, WO 2003/102636, JP2002-243918 et JP-A-60 220301.

Les structures mécaniques associées aux membranes sont toutes très complexes et ont un coût beaucoup trop élevé pour une application dans les appareils photos miniatures tels que ceux intégrés dans les téléphones-appareils photos.

Les figures 8A, 8B montrent deux exemples de lentilles liquides à distance focale variable, décrits dans le brevet US-B-5 917 657. Ces lentilles sont choisies car elles illustrent les lentilles les moins complexes au niveau de leur actionnement.

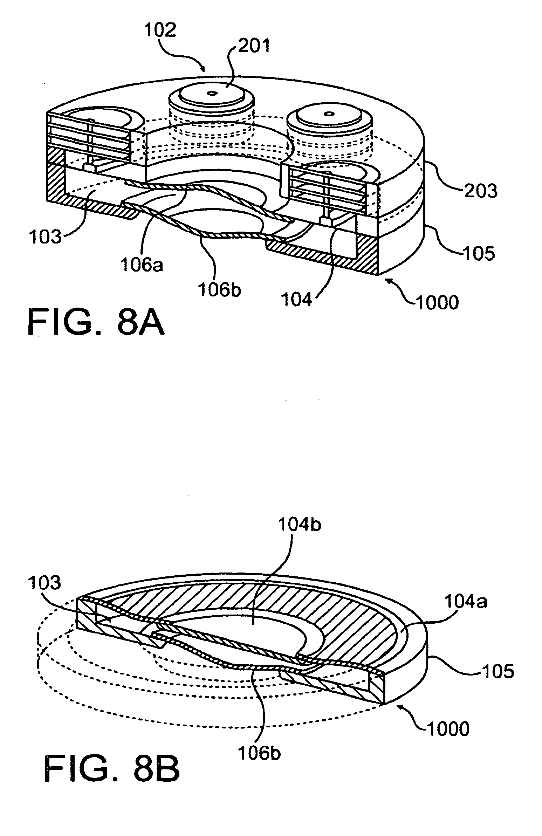

La lentille liquide 1000 de la figure 8A est constituée d'un premier film élastique transparent 106a central, d'un second film élastique transparent central 106b, d'un film élastique 104 périphérique et d'un conteneur périphérique 105. Les premier et second films élastiques transparents 106a, 106b sont placés en vis-à-vis. Le film élastique 104 périphérique est fixé autour du premier film élastique transparent 106a et l'ensemble forme une première membrane 2. La première membrane est ancrée sur une face du conteneur périphérique 105. La seconde membrane est constituée par le second film élastique. Elle est ancrée sur une autre face du conteneur périphérique. Tous ces éléments sont scellés hermétiquement les uns aux autres et contiennent un liquide 103. Les moyens d'actionnement de la lentille 102, dont la fonction est d'exercer une pression sur le liquide 103, agissent au niveau du film élastique périphérique 104. Ils sont formés de plusieurs actionneurs 201 disposés dans un conteneur 203 en forme de couronne. Ce conteneur est relativement épais. Leur action a lieu sur la membrane via un anneau rapporté sur le film élastique périphérique 104. Les deux conteneurs 105, 203 sont assemblés face à face. Les films élastiques transparents n'ont qu'un rôle optique et le film élastique périphérique n'a qu'un rôle mécanique.

Ces lentilles liquides 1000 présentent des inconvénients que l'on va lister.

Un inconvénient important est lié au type d'actionnement qui est encombrant et complexe notamment à cause du conteneur et pas très efficace.

Les procédés de fabrication de ces lentilles sont unitaires et pluridisciplinaires. Ces procédés incluent des techniques issues de la plasturgie pour élaborer et mettre en forme les films, des techniques d'injection et d'usinage pour réaliser les conteneurs. Les procédés d'assemblage hermétique des films au conteneur sont différents selon la nature du scellement (plastique-plastique, plastique-verre, plastique-métal). De plus les scellements à réaliser ne sont pas tous situés dans un même plan, ce qui entraîne des manipulations délicates de films ou de plaques, ce qui complique considérablement le procédé employé et l'outillage nécessaire. Ces techniques ne sont pas compatibles avec les procédés classiques de fabrication par lots employés pour la réalisation de systèmes micro électromécaniques MEMS ou de systèmes micro optoélectromécaniques MOEMS. Leur coût reste en conséquence élevé et leur encombrement également.

De plus, il est difficile de positionner lors de l'assemblage le film élastique transparent au film élastique périphérique et de parfaitement positionner l'anneau lors de son report sur le film élastique périphérique. Une autre difficulté est de parfaitement positionner les actionneurs par rapport à l'anneau. Si le positionnement n'est pas parfait, il en résulte des aberrations optiques qui dégradent la qualité de l'image obtenue.

En outre, il est nécessaire que le film élastique périphérique qui va être déplacé par les moyens d'actionnement aussi bien au repos qu'en fonctionnement soit le plus parallèle possible par rapport à la surface du conteneur périphérique au niveau de l'ancrage. Sinon des aberrations optiques se produisent et elles dégradent la qualité de l'image obtenue. En effet sur la figure 8B, on a représenté en coupe la lentille liquide décrite dans le brevet US-B-5 917 657 à l'exception des moyens d'actionnement. Pour éviter tout risque d'aberration optique, les plans principaux dans lesquels s'étendent les portions de membrane au niveau du scellement au conteneur et du scellement entre les différents films constituant la membrane doivent être sensiblement parallèles. Il est très difficile d'arriver à ces résultats avec les multiples scellements préconisés.

En outre, puisque plusieurs films sont scellés hermétiquement ensemble, à la manière d'un patchwork, et au conteneur pour encapsuler le liquide, le risque de fuite n'est pas négligeable.

Un autre inconvénient est lié à l'énergie électrique consommée par les moyens d'actionnement d'une part lorsqu'ils actionnent la membrane mais aussi lorsqu'ils maintiennent la membrane dans une position donnée. On cherche bien sûr à réduire au minimum la consommation d'énergie dans les applications de téléphones portables.

La demande de brevet FR 2 912 514 décrit un dispositif optique comportant une membrane ancrée sur un support délimitant une chambre contenant du fluide, la chambre communiquant avec un réservoir. Des moyens d'actionnement sollicitent la membrane dans sa partie centrale et à sa périphérie en lui appliquant des forces de même sens.

La demande de brevet US 2007/0030573 montre un dispositif optique comportant une membrane ancrée sur un support en deux zones d'ancrage. Des moyens d'actionnement sollicitent la membrane à sa périphérie mais pas dans sa partie centrale.

### EXPOSÉ DE L'INVENTION

La présente invention a justement pour but de fournir un dispositif optique à membrane déformable tel au moins une lentille ou un miroir à fluide qui ne possède pas les inconvénients mentionnés ci-dessus à savoir la complexité des moyens d'actionnement et leur encombrement, les aberrations optiques, le risque de fuite important, l'incompatibilité avec l'environnement micro-électronique, l'impossibilité d'être fabriqué par lots.

Un autre but de l'invention est d'augmenter l'efficacité des moyens d'actionnement pour déformer la membrane de manière à obtenir une déformation de la membrane plus importante que ce que l'on pouvait obtenir dans l'art antérieur.

Encore un autre but de l'invention est de réduire la consommation électrique du dispositif optique aussi bien lors de l'actionnement des moyens d'actionnement que lorsqu'ils sont statiques et qu'ils maintiennent la membrane dans une position déformée.

Pour y parvenir, la présente invention est un dispositif optique selon la revendication 1 - Il comporte au moins une membrane déformable, un support, et des moyens d'actionnement destinés à solliciter la membrane pour la déformer, la membrane étant dotée d'une zone d'ancrage sur le support et d'une zone sensiblement centrale apte à se déformer de manière réversible entourée par la zone d'ancrage, le support et la membrane contribuant à emprisonner un volume constant situé au moins au niveau de l'intérieur de la zone d'ancrage d'un fluide, dit premier fluide, en contact avec une des faces de la membrane. Les moyens d'actionnement de la membrane comportent des moyens d'actionnement principaux qui sollicitent la membrane dans une zone périphérique comprise entre la zone centrale et la zone d'ancrage de manière à la déplacer dans un sens et à déplacer le premier fluide vers la zone centrale et des moyens d'actionnement complémentaires ancrés au moins à la membrane qui sollicitent la membrane dans la zone centrale pour la déplacer en sens inverse.

Le dispositif optique comporte en outre de préférence un capot en regard de la membrane pour la protéger.

Les moyens d'actionnement principaux peuvent être formés d'au moins un actionneur de type électrostatique, piézoélectrique, bimorphe thermique, magnétique.

Lorsque les moyens d'actionnement principaux comportent au moins un actionneur électrostatique, cet actionneur électrostatique comporte deux électrodes en vis-à-vis, séparées par un diélectrique, avec une électrode fixe au niveau du support et une électrode mobile au niveau de la membrane.

Les moyens d'actionnement complémentaires comportent, de préférence, au moins un actionneur électrostatique formé de deux électrodes en vis-à-vis, séparées par un diélectrique, avec une électrode mobile au niveau de la membrane et une électrode fixe au niveau d'un autre support, tel qu'un capot de protection de la membrane fixé au support.

Les moyens d'actionnement complémentaires peuvent comporter plusieurs actionneurs électrostatiques, les électrodes fixes et/ou les électrodes mobiles des actionneurs étant agencées de manière concentrique autour d'un axe optique du dispositif optique.

Une électrode fixe ou une électrode mobile peut être commune à plusieurs actionneurs appartenant aux moyens d'actionnement principaux et/ou aux moyens d'actionnement complémentaires.

Une électrode mobile des moyens d'actionnement principaux et/ou des moyens d'actionnement complémentaires peut se trouver sur une des faces de la membrane, être en sandwich entre deux sous-couches de la membrane ou être formée par la membrane elle-même.

Une électrode mobile des moyens d'actionnement principaux et une électrode mobile des moyens d'actionnement complémentaires peuvent être confondues.

Une électrode mobile des moyens d'actionnement principaux et une électrode mobile des moyens d'actionnement complémentaires peuvent être reliées électriquement par au moins une extension électriquement conductrice.

La membrane peut être réalisée à base de matériaux organiques tels que le polydiméthylsiloxane, le polyméthacrylate de méthyle, le polyéthylène téréphtalate, le polycarbonate, le parylène, les résines époxydes ou silicones, ou de matériaux minéraux tels que le silicium, l'oxyde de silicium, le nitrure de silicium, le carbure de silicium, le silicium polycristallin, le nitrure de titane, le carbone diamant, l'oxyde d'étain et d'indium, l'aluminium.

Le capot peut être réalisé à base de verre ou de matériau organique tel que le polyéthylène téréphtalate, le polyéthylène naphtalate, le polymétacrilate de méthyle, le polycarbonate.

Le capot délimite une cavité qui est emplie d'un second fluide.

Les moyens d'actionnement complémentaires peuvent comporter une partie située à l'extérieur du volume de premier fluide.

Les moyens d'actionnement complémentaires peuvent être, en variante, piézoélectriques.

Le dispositif optique peut comporter des moyens d'asservissement d'une tension à appliquer aux moyens d'actionnement principaux en fonction de l'épaisseur de premier fluide au voisinage des moyens d'actionnement principaux et/ou des moyens d'asservissement d'une tension à appliquer aux moyens d'actionnement complémentaires en fonction de l'épaisseur de second fluide au voisinage des moyens d'actionnement complémentaires.

Le second fluide est emprisonné dans la cavité ou est libre de sortir de la cavité.

Dans le cas où le dispositif optique comporte plusieurs membranes, un capot unique peut protéger les membranes.

Dans le dispositif optique selon l'invention, le capot peut porter une électrode fixe commune à plusieurs moyens d'actionnement complémentaires chacun sollicitant une membrane différente.

Le dispositif optique peut fonctionner en transmission ou en réflexion.

Lorsqu'il fonctionne en transmission, le second fluide possède de préférence un indice absolu de réfraction différent de celui du premier fluide, cet indice absolu étant en particulier inférieur à celui du premier fluide lorsque le dispositif optique est convergent et étant supérieur lorsque le dispositif optique est divergent. Si le second fluide possède un indice absolu supérieur à celui du premier fluide pour une même forme de dioptre, alors pour cette même forme de dioptre, le dispositif optique devient divergent. Dans le cas d'un dispositif optique fonctionnant en réflexion, les deux fluides sont choisis indépendamment l'un de l'autre et en fonction des caractéristiques désirées.

Pour éviter de dégrader les performances optiques du dispositif optique à cause des effets de la pesanteur, il est préférable que le second fluide ait une densité aussi proche que possible de celle du premier fluide quel que soit le mode de fonctionnement en transmission ou en réflexion.

Les moyens d'actionnement principaux et les moyens d'actionnement complémentaires sont activables successivement ou simultanément éventuellement en décalé.

La présente invention concerne également un dispositif de prise de vue comportant au moins un dispositif optique ainsi caractérisé.

### BRÈVE DESCRIPTION DES DESSINS

La présente invention sera mieux comprise à la lecture de la description d'exemples de réalisation donnés, à titre purement indicatif et nullement limitatif, en faisant référence aux dessins annexés sur lesquels :
la figure 1 montre en coupe un dispositif optique selon l'invention ;
les figures 2A, 2B montrent en coupe et en vue de dessus une variante d'un dispositif optique selon l'invention dont les moyens d'actionnement complémentaires comportent des électrodes fixes concentriques ;
les figures 3A à 3G montrent diverses variantes d'un dispositif optique selon l'invention ;
les figures 4A, 4B illustrent le déplacement du premier fluide dans le cas où le second fluide est libre et dans le cas où il est emprisonné ;
les figures 5A, 5B illustrent des variantes d'un dispositif optique selon l'invention possédant plusieurs membranes ;
la figure 6 illustre une variante d'un dispositif optique selon l'invention équipé de moyens d'asservissement de la tension à appliquer aux moyens d'actionnement principaux et de moyens d'asservissement de la tension à appliquer aux moyens d'actionnement complémentaires ;
les figures 7A, 7B montrent deux dispositifs de prise de vue employant au moins un dispositif optique de l'invention ;
les figures 8A, 8B, déjà décrites, montrent des lentilles liquides conventionnelles.

Des parties identiques, similaires ou équivalentes des différentes figures décrites ci-après portent les mêmes références numériques de façon à faciliter le passage d'une figure à l'autre.

Les différentes parties représentées sur les figures ne le sont pas nécessairement selon une échelle uniforme, pour rendre les figures plus lisibles.

### EXPOSÉ DÉTAILLÉ DE MODES DE RÉALISATION PARTICULIERS

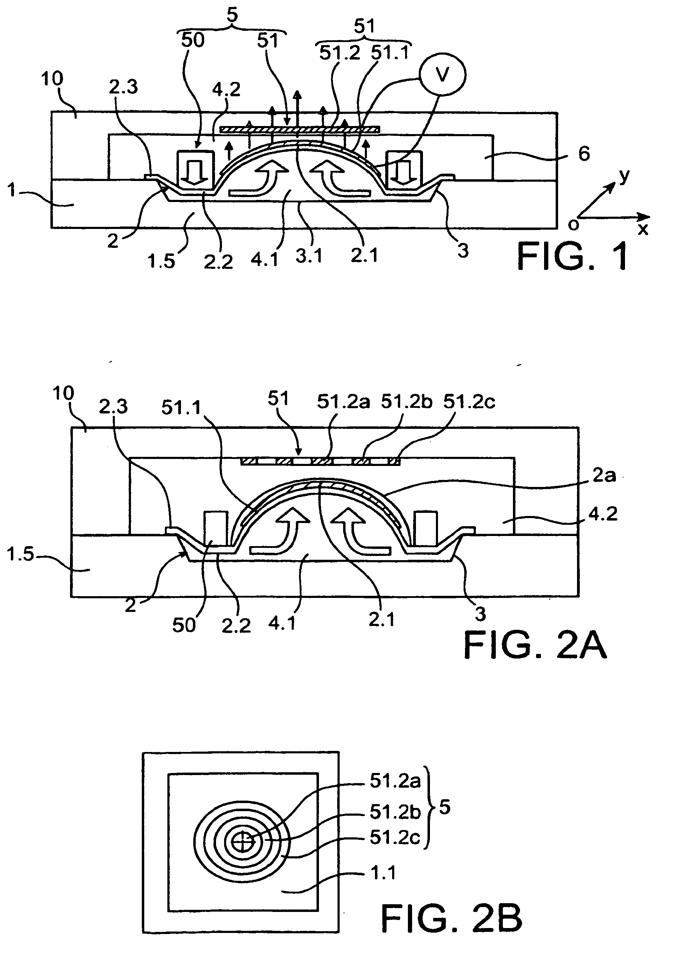

On va se référer à la figure 1 qui montre un dispositif optique objet de l'invention. Il comporte au moins une membrane 2 déformable dont le bord est ancré sur un support 1.5.

La zone de la membrane 2 qui est ancrée sur le support 1.5 est appelée zone d'ancrage et est référencée 2.3. Dans cet exemple l'ancrage se fait au niveau d'un cadre 1 du support 1.5. Le cadre 1 contribue à délimiter une cuvette 3 formée dans le support 1.5 en la bordant. La cuvette 3 est destinée à renfermer un volume constant de fluide 4.1 dit premier fluide situé au moins à l'intérieur de la zone d'ancrage 2.3. Si ce premier fluide est un gaz, une légère compression du gaz peut être admise. Le seuil maximum de compression admissible correspond à une valeur au-delà de laquelle une zone sensiblement centrale 2.1 de la membrane ne se déforme plus. Il peut bien sûr s'agir d'un liquide.

L'une des faces de la membrane 2 est baignée par le premier fluide 4.1. Le support 1.5 s'étend selon un plan principal xoy. La cuvette 3 possède un fond 3.1. Lorsque le dispositif optique fonctionne en transmission, un faisceau optique (non représenté) est destiné à traverser la membrane 2, dans la zone sensiblement centrale 2.1 appelée également champ optique, le premier fluide 4.1 et le support 1.5 au niveau du fond 3.1 de la cuvette 3. Par la suite pour simplifier l'expression zone centrale est utilisée. La zone d'ancrage 2.3 entoure la zone centrale 2.1 de la membrane 2. Le cadre 1 et la cuvette 3 ne sont pas nécessaires, le support 1.5 pouvant être un substrat sensiblement plan. Le fond 3.1 est transparent pour le faisceau optique utilisé. La membrane 2 possède une face en contact avec le premier fluide 4.1. Si le dispositif optique fonctionne en réflexion, au moins une des faces de la membrane 2 est réfléchissante pour le faisceau optique. Lors de l'utilisation du dispositif optique selon l'invention en réflexion, la réflexion peut se faire au niveau de la face de la membrane côté premier fluide 4.1, au niveau de l'autre face de la membrane ou au niveau des deux faces. Le support 1.5 et la membrane 2 contribuent à emprisonner un volume constant, situé au moins au niveau de l'intérieur de la zone d'ancrage 2.3 du premier fluide 4.1.

Dans l'exemple de la figure 1, la membrane 2 est placée dans une cavité 6 délimitée par un capot 10 qui est scellé au support 1.5. La fixation peut se faire par exemple par collage moléculaire, par collage organique, par collage anodique, par collage eutectique une couche d'alliage par exemple en Au/Si ou Au/Sn par exemple étant intercalée entre le capot 10 et le support 1.5 à sceller. Ces techniques de collage sont couramment utilisées dans le domaine de la microélectronique et des microsystèmes. Le capot 10 est en regard de la membrane 2.

La cavité 6 est emplie d'un second fluide 4.2, l'autre face de la membrane 2 étant en contact avec le second fluide 4.2. Le capot 10, au moins dans sa partie centrale, et le second fluide 4.2 doivent être transparents pour le faisceau optique incident qui va soit se réfléchir sur la membrane 2, soit la traverser selon la nature du dispositif optique.

Le capot 10 peut être réalisé en verre ou en matériau organique tel que le polyéthylène téréphtalate PET, le polyéthylène naphtalate, le polymétacrilate de méthyle PMMA, le polycarbonate PC s'il doit transmettre des longueurs d'ondes dans le visible. Le capot 10 assure une protection de la membrane 2 car de tels dispositifs optiques à membrane 2 déformable sont des objets fragiles dont la manipulation est délicate.

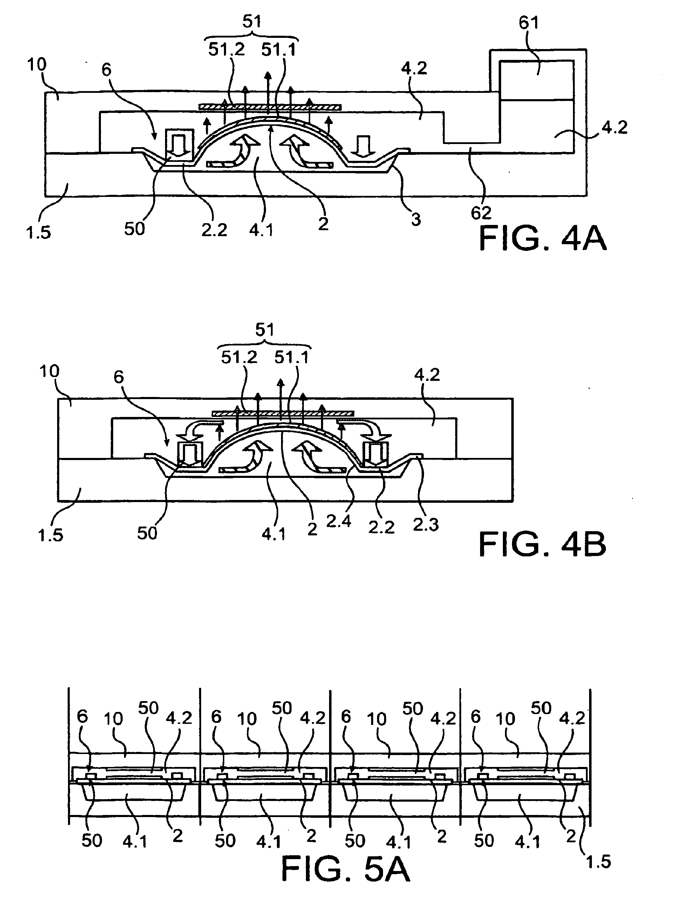

Le dispositif optique peut être réalisé par des techniques connues en microélectronique de fabrication par lots et tous les capots 10 des différents dispositifs peuvent être réalisés de manière collective comme illustré sur la figure 5A décrite ultérieurement.

Par membrane 2, on entend tout film souple faisant office de barrière entre le premier fluide 4.1 et le second fluide 4.2 se trouvant de l'autre côté de la barrière par rapport au premier fluide 4.1. Ce second fluide 4.2 peut être tout simplement de l'air ou un autre gaz ou même un liquide.

La membrane 2 est formée d'au moins une couche qui est continue depuis la zone centrale 2.1 jusqu'à la zone d'ancrage 2.3. Elle peut être monocouche ou multicouche, si elle est multicouche, elle peut être multicouche localement seulement. Elle peut être multicouche dans la zone périphérique 2.2 et pas dans la zone centrale 2.1 par exemple comme illustré sur la figure 2A.

La membrane 2 peut être réalisée à base de matériaux organiques tels que le polydiméthylsiloxane, le polyméthacrylate de méthyle, le polyéthylène téréphtalate, le polycarbonate, le parylène, les résines époxydes ou silicones, ou de matériaux minéraux tels que le silicium, l'oxyde de silicium, le nitrure de silicium, le carbure de silicium, le silicium polycristallin, le nitrure de titane, le carbone diamant, l'oxyde d'étain et d'indium, l'aluminium. Elle peut ainsi être conductrice électriquement ou au contraire diélectrique.

Pour pouvoir faire varier la distance focale du dispositif optique, on prévoit des moyens d'actionnement 5. Ils sont formés de moyens d'actionnement principaux 50 qui agissent sur la membrane 2 dans une zone périphérique 2.2 de la membrane 2 située entre la zone d'ancrage 2.3 et la zone centrale 2.1 et de moyens d'actionnement complémentaires 51 qui agissent sur la membrane 2 dans la zone centrale 2.1, les deux moyens d'actionnement 50, 51 agissant sur la membrane 2 en sens inverse, c'est-à-dire qu'ils appliquent sur la membrane 2 des forces de directions opposées. Les moyens d'actionnement principaux 50 sollicitent la membrane 2 dans la zone périphérique 2.2 de telle manière que le premier fluide 4.1 soit chassé vers la zone centrale 2.1 de la membrane 2 pour la déformer. Sur la figure 1, les moyens d'actionnement principaux 50 poussent la membrane 2 vers la cuvette 3, ou plus généralement la rapprochent du support 1.5. Les flèches se trouvant dans le premier fluide 4.1 illustrent le mouvement du premier fluide 4.1 lors de l'activation des moyens d'actionnement 50.

A l'inverse les moyens d'actionnement complémentaires 51 tirent la membrane 2 pour l'éloigner du support 1.5 et la rapprocher du capot 10. Les moyens d'actionnement complémentaires 51 amplifient donc la déformation de la membrane 2 obtenue par les moyens d'actionnement principaux 50 dans la zone centrale 2.1. Les moyens d'actionnement complémentaires 51 ne doivent pas contrecarrer l'action des moyens d'actionnement principaux 50 mais au contraire la compléter ou l'amplifier.

Les moyens d'actionnement complémentaires 51 en coopérant avec les moyens d'actionnement principaux 50 permettent, pour une tension donnée appliquée aux moyens d'actionnement principaux 50, d'amplifier la déformation de la membrane 2. Pour une déformation de la membrane 2 donnée, les moyens d'actionnement complémentaires 51 en coopérant avec les moyens d'actionnement principaux 50 permettent de diminuer la tension à appliquer aux moyens d'actionnement principaux.

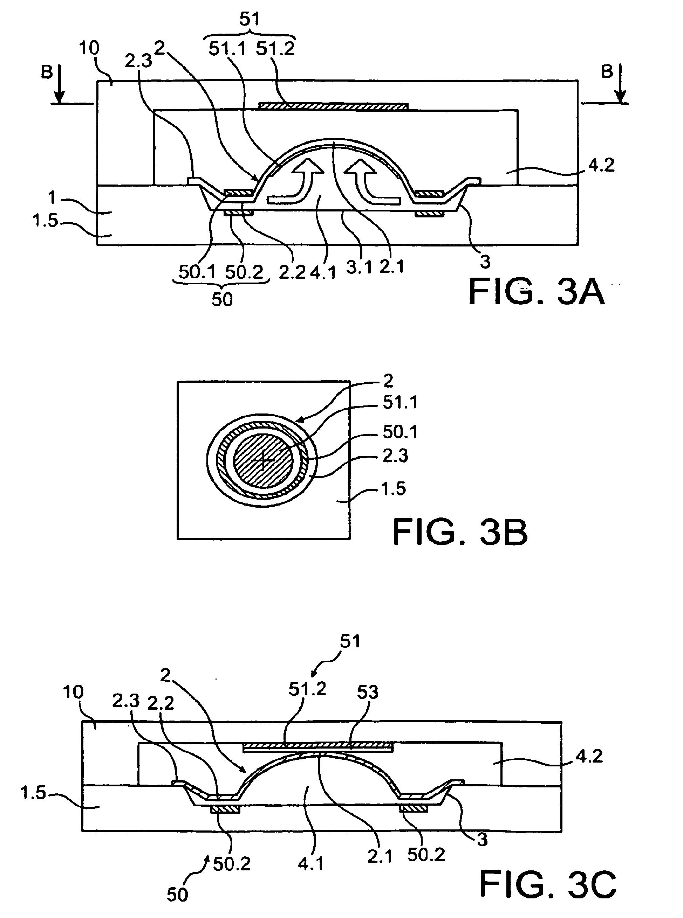

Les moyens d'actionnement principaux 50 peuvent être formés d'au moins un actionneur de type électrostatique, piézoélectrique, notamment formés de céramique ferroélectrique PZT (PbZrTiO₃) en couche mince, de type bimorphe thermique, de type magnétique ou autre. Sur les figures 1, 2A, les moyens d'actionnement principaux 50 ne sont représentés que de manière schématique, sans que leur nature ne soit précisée, alors que sur les figures 3A, 3B, ils sont représentés par au moins un actionneur de type électrostatique. Ils comportent au moins un couple d'électrodes 50.1, 50.2 en vis-à-vis, séparées par du diélectrique, l'une étant mobile et située au niveau de la membrane 2 et l'autre étant fixe et située au niveau du support 1.5. Le diélectrique permet d'éviter un court-circuit entre les deux électrodes d'un actionneur. Les deux électrodes 50.1, 50.2 du couple sont destinées à être portées à une différence de potentiel lors de l'actionnement, de manière à s'attirer. Sur les figures 3A, 3B, il n'y a pour les moyens d'actionnement principaux 50 qu'un seul actionneur. Il possède une électrode mobile 50.1 en forme de couronne située sur la membrane 2 à l'opposé du premier fluide 4.1 et une électrode fixe 50.2 également en forme de couronne, située dans le support 1.5 au fond 3.1 de la cuvette 3. Cette électrode fixe 50.2 est en contact avec le premier fluide 4.1. On suppose que la membrane 2 est réalisée dans un matériau diélectrique côté premier fluide 4.1. Chaque actionneur peut ne solliciter qu'une partie, dite partie sollicitée, de la zone périphérique 2.2. Lorsqu'il y a plusieurs actionneurs il peut être préférable de répartir les différents actionneurs sensiblement régulièrement autour de la membrane 2.

Les moyens d'actionnement complémentaires 51 sont de préférence électrostatiques. Ils peuvent comporter un ou plusieurs actionneurs, chacun formé d'un couple d'électrodes 51.1, 51.2, en vis-à-vis, séparées par du diélectrique, l'une des électrodes du couple étant mobile et étant située au niveau de la membrane 2 et l'autre étant fixe et étant située au niveau d'un second support placé à l'opposé du premier support 1.5 par rapport à la membrane 2. Sur l'exemple de la figure 1, le second support est matérialisé par le capot 10. D'autres supports sont possibles.

Sur les figures 3A, 3B, les moyens d'actionnement complémentaires 51 ne comportent qu'un actionneur ayant des électrodes sensiblement circulaires en vis-à-vis, celle qui est mobile 51.1 et qui se trouve au niveau de la membrane 2 étant du côté du premier fluide 4.1. La figure 3B est une vue de dessus du dispositif optique capot ôté, l'électrode mobile 51.1 des moyens d'actionnement complémentaires 51 étant vue par transparence. L'électrode mobile 50.1 des moyens d'actionnement principaux 50 et l'électrode mobile 51.1 des moyens d'actionnement complémentaires 51 sont sensiblement concentriques, centrées sur l'axe optique du dispositif optique. L'axe optique est matérialisé par la croix.

Une électrode mobile 50.1, 51.1 située au niveau de la membrane 2, qu'elle appartienne à un actionneur des moyens d'actionnement principaux 50 ou à un actionneur des moyens d'actionnement complémentaires 51 peut se trouver sur une face de la membrane 2, sur l'autre face de la membrane 2, être noyée dans la membrane 2 dans le cas où la membrane 2 est multicouche ou même être formée par la membrane 2 elle-même, dans le cas où la membrane 2 est électriquement conductrice, en aluminium par exemple. Cette dernière configuration est illustrée sur la figure 3C. Une couche de matériau diélectrique 53 recouvre l'électrode fixe 51.2 des moyens d'actionnement complémentaires 51. Dans ce cas le second fluide 4.2 peut ne pas être diélectrique.

Dans un couple d'électrodes des moyens d'actionnement complémentaires 51, l'électrode fixe 51.2 se trouve au niveau d'une surface intérieure d'une paroi sommitale du capot 10.

Lorsqu'il y plusieurs actionneurs et donc plusieurs couples d'électrodes, il est possible que chacun ait une électrode qui lui est propre d'un côté et qu'il partage une électrode avec un ou plusieurs actionneurs de l'autre côté. Ainsi une électrode qu'elle soit mobile sur la membrane 2 ou fixe sur le support 10 ou 1.5 peut faire partie de plusieurs actionneurs. Cette particularité s'applique bien sûr aussi bien aux moyens d'actionnement principaux 50 qu'aux moyens d'actionnement complémentaires 51. On peut se référer aux figures 2A, 2B. Il y a plusieurs actionneurs au niveau des moyens d'actionnement complémentaires 51. Ces actionneurs partagent une même électrode mobile 51.1. Par contre ils ont chacun une électrode fixe qui leur est propre, les électrodes fixes sont référencées 51.2a, 51.2b, 51.2c.

Lorsqu'il y a plusieurs actionneurs et donc plusieurs couples d'électrodes dans les moyens d'actionnement complémentaires 51, il est préférable que les électrodes voisines d'actionneurs différents soient agencées sensiblement concentriquement. L'une d'entre elles peut être en forme de disque et une ou plusieurs peuvent être en forme de couronnes concentriques entre elles et avec le disque et de tailles différentes. Cette configuration est illustrée sur les figures 2A, 2B. Ce sont les électrodes fixes sur le capot 10 qui sont multiples, sur la membrane 2 il n'y a qu'une seule électrode mobile 51.1 sensiblement circulaire dont le rayon est au moins égal au rayon le plus grand de l'électrode mobile la plus éloignée de l'électrode circulaire 51.2c, de manière à ce que chaque électrode d'un couple soit en vis-à-vis d'une électrode du même couple. L'inverse serait possible. Dans l'exemple des figures 2A, 2B, de préférence les électrodes sont centrées sur l'axe optique autour duquel est construit le dispositif optique. On pourrait bien entendu inverser les électrodes et mettre la pluralité d'électrodes sur la membrane 2 et l'électrode unique sur le capot 10.

Lorsqu'il y a plusieurs actionneurs pour les moyens d'actionnement complémentaires 51, ils sollicitent la membrane 2 au niveau de parties sollicitées incluses dans la zone centrale 2.1. Sur la figure 2B, les parties sollicitées correspondent aux surfaces de recouvrement entre les deux électrodes d'un actionneur.

Sur la figure 2A, l'électrode mobile 51.1 des moyens d'actionnement complémentaires est prise en sandwich entre deux sous couches 2a, 2b de la membrane 2. Dans l'exemple de la figure 2A, la sous-couche 2b s'étend de manière continue jusqu'à la zone d'ancrage 2.3. L'autre sous-couche 2a occupe la zone centrale 2.1 mais n'atteint pas la zone périphérique 2.2. On pourrait imaginer que l'électrode mobile 50.1 des moyens d'actionnement principaux 50 soit également en sandwich entre deux sous-couches de la membrane 2.

Lorsque les moyens d'actionnement 50, 51 qu'ils soient principaux ou complémentaires comportent plusieurs actionneurs, ils peuvent être localisés de manière à respecter une symétrie circulaire. Ils peuvent être actionnés de manière indépendante les uns des autres, de manière à ce que des forces d'amplitudes différentes s'appliquent sur la membrane 2 ou que des forces s'appliquent à certains endroits et pas à d'autres.

Il est ainsi possible de lisser d'éventuelles imperfections apparaissant au niveau du dioptre formé par la membrane 2 et une forme la plus axisymétrique possible est favorisée. Au contraire, dans le cas où le dispositif optique est destiné à de l'optique adaptative, on va générer des déformations localisées inverses de celles d'un front d'onde incident. La répartition des actionneurs peut alors ne pas respecter la symétrie circulaire. De nombreuses configurations sont possibles pour les actionneurs des moyens d'actionnement principaux 50 et pour les moyens d'actionnement complémentaires 51 sans qu'il soit nécessaire de rentrer dans leur détail.

Il est bien sûr possible d'actionner les actionneurs des moyens d'actionnement principaux de concert. Il en est de même pour les actionneurs des moyens d'actionnement complémentaires 51.

Les actionneurs des moyens d'actionnement complémentaires 51 sont situés dans le champ optique du dispositif optique et les électrodes 51.1, 51.2 doivent être aussi transparentes que possible pour le faisceau optique incident qui va les traverser. Pour le visible, elles peuvent être réalisées en oxyde d'indium et d'étain connu sous l'appellation anglaise ITO soit Indium Tin Oxide, ce matériau possédant des propriétés optiques et électriques qui conviennent.

Pour limiter l'impact optique des différentes électrodes 51.1, 51.2, un diélectrique sensiblement de même indice de réfraction que les électrodes elles-mêmes peut être déposé sur l'une et/ou l'autre électrode d'un actionneur des moyens d'actionnement complémentaires 51.

Le matériau diélectrique qui doit séparer les deux électrodes d'un actionneur peut être déposé sur l'électrode fixe 51.2 qui est supportée par le capot 10 comme sur la figure 3C, il porte la référence 53.

L'électrode mobile 51.1 au niveau de la membrane 2 peut elle aussi être recouverte de matériau diélectrique, elle peut se trouver sous la membrane 2 côté du premier fluide 4.1 si la membrane 2 est réalisée en matériau diélectrique comme sur la figure 3A.

Elle peut se trouver en sandwich entre deux sous-couches 2a, 2b de la membrane 2 comme sur la figure 2A. La sous-couche 2b de la membrane 2 se trouve du côté du capot 10 et fait office de diélectrique dans la zone centrale 2.1. Elle peut enfin se trouver sur la membrane 2 du côté du capot 10 et être ou non recouverte de matériau diélectrique comme sur la figure 1.

Dans le cas où l'électrode mobile 51.1 est rapportée sur la membrane 2 dans la zone centrale 2.1, elle peut avoir un lien avec une sous-couche constitutive de la membrane 2 dans une zone de la membrane 2 autre que la zone centrale 2.1. Par exemple, l'électrode mobile 51.1 peut déborder de la zone centrale 2.1 et recouvrir une zone intermédiaire 2.4 de la membrane 2 située entre la zone centrale 2.1 et la zone périphérique 2.2 comme illustré sur la figure 4B.

En variante, au moins une électrode mobile 51.1 qui se trouve sur la membrane 2 et qui appartient aux moyens d'actionnement complémentaires 51 peut avoir un lien électrique avec au moins une électrode mobile 50.1 des moyens d'actionnement principaux 50. Sur la figure 3C, c'est la membrane 2 elle-même qui fait office d'électrode mobile aussi bien pour les moyens d'actionnement principaux 50 que pour les moyens d'actionnement complémentaires 51. La membrane 2 comporte une couche conductrice qui s'étend continûment de la zone centrale 2.1 à la zone périphérique 2.2. Plus précisément la membrane 2 est monocouche et électriquement conductrice.

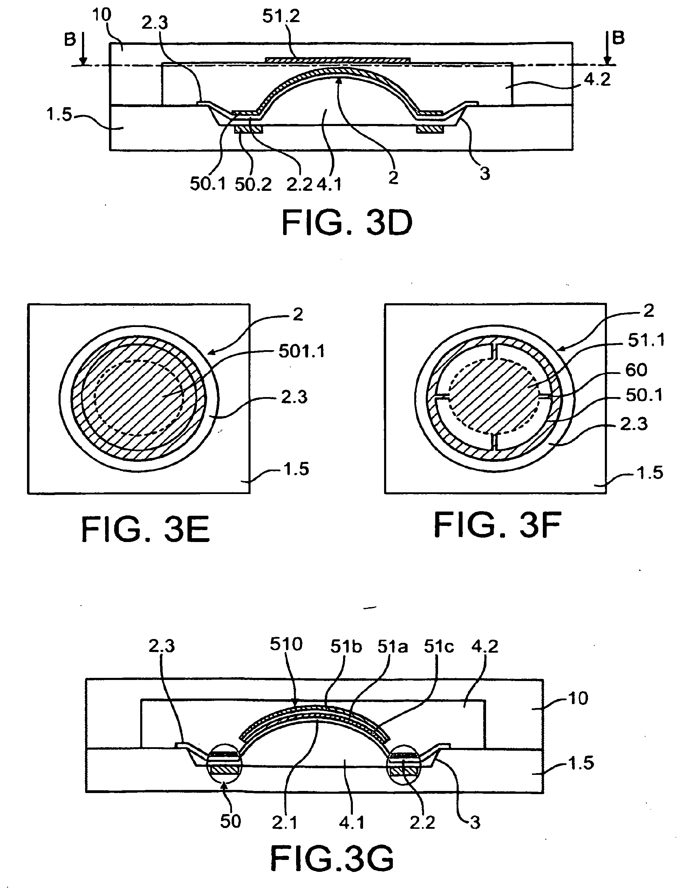

Sur la figure 3D, on a représenté sur la membrane 2, à l'opposé du premier fluide 4.1, une électrode mobile 501.1 qui fait office à la fois d'électrode mobile pour les moyens d'actionnement principaux 50 et d'électrode mobile pour les moyens d'actionnement complémentaires 51. Elle s'étend sur la zone centrale 2.1 et se prolonge de manière continue sur la zone périphérique 2.2 mais n'empiète généralement pas sur la zone d'ancrage 2.3.

La figure 3E montre une vue de dessus d'une telle électrode mobile 501.1 commune aux deux moyens d'actionnement 50, 51. L'électrode mobile commune 501.1 est circulaire. Au final l'électrode commune 501.1 recouvre la membrane 2 et occupe sa zone centrale 2.1 et sa zone périphérique 2.2. La couronne externe correspond à la membrane 2 non recouverte d'électrode, ce qui correspond sensiblement à la zone d'ancrage 2.3. La couronne suivante limitée intérieurement par le trait plein correspond à une électrode mobile des moyens d'actionnement principaux 50 telle qu'on l'a représentée sur la figure 3B. Mais dans la configuration des figures 3D et 3E, l'électrode mobile des moyens d'actionnement principaux 50 se prolonge de manière continue jusqu'à recouvrir la zone centrale 2.1 et faire office d'électrode mobile des moyens d'actionnement complémentaires 51. Les pointillés circulaires représentent le contour de l'électrode fixe 51.2 des moyens d'actionnement complémentaires 51, celle qui est visible au niveau du capot 10 sur la figure 3D. En définitive, c'est le recouvrement entre les deux électrodes de chaque couple d'électrodes des moyens d'actionnement, qu'ils soient principaux ou complémentaires, qui va avoir de l'effet sur la déformation de la membrane 2. La zone déplacée de la membrane 2 dépend de la surface de recouvrement entre les deux électrodes en vis-à-vis d'un actionneur, c'est-à-dire de leur intersection d'un point de vue mathématique. De nombreuses variantes existent pour le choix de cette surface de recouvrement.

En variante sur la figure 3F, l'électrode mobile 50.1 des moyens d'actionnement principaux 50 est en forme de couronne. L'électrode mobile 51.1 des moyens d'actionnement complémentaires 51 est circulaire et les deux électrodes mobiles 51.1, 50.1 sont reliées électriquement par au moins une extension conductrice 60 dans l'exemple dirigée sensiblement radialement. Il existe bien entendu une pluralité de choix possibles pour réaliser un lien électrique entre l'actionnement principal et l'actionnement complémentaire. L'objectif est bien entendu de faciliter la déformation de la membrane 2.

Sur la figure 3G, les moyens d'actionnement complémentaires 51 ne sont plus de type électrostatique mais de type piézoélectrique. Dans l'exemple illustré sur cette figure, ils comportent un actionneur piézoélectrique 510 avec une partie en matériau piézoélectrique 51a prise en sandwich entre deux électrodes 51b, 51c.

L'actionneur piézoélectrique est ancré sur la membrane 2. Dans l'exemple, il se trouve sur la face de la membrane 2 située du côté du capot 10. Il aurait pu être ancré sur l'autre face, en contact avec le premier fluide 4.1 ou même être noyé dans la membrane 2 si elle est multicouche. Dans cet exemple également, la membrane 2 pourrait être dotée d'une ou plusieurs sous couches ajoutées localement afin d'optimiser l'action des moyens d'actionnement complémentaires. Les matériaux utilisés pour les moyens d'actionnement complémentaires doivent être compatibles avec les performances optiques requises par le dispositif optique.

Dans le cas d'un dispositif optique fonctionnant en réflexion, ils doivent être transparents dans la gamme de longueurs d'onde de fonctionnement du dispositif s'ils sont en amont de la couche réfléchissante. Aucune condition n'est requise s'ils sont en aval de la couche réfléchissante.

Pour un dispositif optique fonctionnant en transmission, ils doivent être transparents également.

Par le terme transparent, on veut dire qu'ils possèdent une transmission optique en accord avec un fonctionnement satisfaisant du dispositif.

Sur les exemples décrits aux figures 3A à 3G, les moyens d'actionnement complémentaires 51 comportent une partie qui se trouve située à l'extérieur du volume du premier fluide 4.1.

On va voir maintenant comment faire fonctionner les moyens d'actionnement principaux 50 et complémentaires 51. Trois modes de fonctionnement peuvent être distingués. Dans le premier mode de fonctionnement, l'actionnement des moyens d'actionnement complémentaires 51 peut être simultané avec celui des moyens d'actionnement principaux 50. Les deux moyens d'actionnement 50, 51 sont activés en même temps. La déformation de la zone centrale 2.1 de la membrane 2 est amplifiée par rapport au cas où seuls les moyens d'actionnement principaux 50 sont activés. Les effets de l'actionnement principal et de l'actionnement complémentaire s'ajoutent dès le début de l'actionnement.

Dans le second mode de fonctionnement, il est possible que les moyens d'actionnement complémentaires 51 soient activés seulement après que les moyens d'actionnement principaux 50 aient commencé à déformer la zone centrale 2.1 de la membrane 2. Ils sont activés simultanément en décalé, c'est-à-dire seulement pendant une période de temps, en dehors de cette période de temps seul un des moyens d'actionnement est activé. Par exemple, on peut imaginer qu'à partir d'un certain seuil de déformation de la zone centrale 2.1 de la membrane 2, la distance entre la membrane 2 dans la zone centrale 2.1 et le capot 10, c'est-à-dire la distance entre les électrodes en vis-à-vis d'un actionneur des moyens d'actionnement complémentaires 51 devient suffisamment faible pour que l'actionnement des moyens d'actionnement complémentaires 51 puisse intervenir et avoir un effet significatif sur la déformation de la zone centrale 2.1 de la membrane 2. A partir de ce seuil, les deux moyens d'actionnement 50, 51 fonctionnent ensemble. L'avantage de ce second mode de fonctionnement est de déclencher l'actionnement complémentaire seulement lorsque celui-ci est performant et participe pleinement à la déformation de la zone centrale 2.1 de la membrane 2. Par rapport au premier mode de fonctionnement, l'intérêt est de limiter la consommation électrique du dispositif optique.

Dans le troisième mode de fonctionnement, les moyens d'actionnement complémentaires 51 ne sont activés que lorsque les moyens d'actionnement principaux 50 ne sont pas activés mais qu'ils ont été activés de préférence au préalable. Par exemple, lorsque la zone centrale 2.1 est dans une position donnée obtenue par les moyens d'actionnement principaux 50, l'actionnement complémentaire peut prendre le relais et maintenir cette position ou même poursuivre la déformation alors que les moyens d'actionnement principaux 50 sont désactivés. L'avantage est également une minimisation de la consommation électrique dans la mesure où les moyens d'actionnement complémentaires 51 consomment moins que les moyens d'actionnement principaux 50.

On a déjà mentionné que le second fluide 4.2 se trouvant dans la cavité, entre le capot 10 et la membrane 2 peut être un gaz comme de l'air ou de l'azote, de l'argon, de l'hélium par exemple mais aussi un liquide. Le premier fluide 4.1 et/ou le second fluide 4.2, s'ils sont liquides, peuvent être choisis parmi le carbonate de propylène, l'eau, un liquide d'indice, une huile optique telle que les huiles silicone. Si le premier fluide est un gaz, il peut s'agir d'azote, d'hélium, d'argon par exemple. Dans un dispositif optique fonctionnant en transmission, c'est-à-dire de type lentille, il est favorable que le second fluide 4.2 soit un gaz comme de l'air et que le premier fluide 4.1 soit un liquide comme de l'eau ou un autre liquide à indice de réfraction absolu élevé, car il se produit un saut d'indice important au niveau du dioptre, c'est-à-dire de la membrane 2. Il y a une différence importante entre l'indice absolu de réfraction de l'air qui vaut 1,000 293 et celui de l'eau qui vaut 1,333. Cela permet de donner une puissance optique élevée au dispositif optique qui est alors une lentille liquide convergente fonctionnant en transmission.

Plus généralement, lorsque le dispositif optique fonctionne en transmission, on donne au second fluide 4.2 un indice absolu de réfraction différent de celui du premier fluide 4.1, cet indice absolu est inférieur à celui du premier fluide 4.1 lorsque le dispositif optique est convergent et est supérieur à celui du premier fluide 4.1 lorsque le dispositif optique est divergent.

Par contre l'air en tant que second fluide 4.2 n'est pas très favorable pour le fonctionnement des moyens d'actionnement complémentaires 51 de type électrostatiques. Idéalement, on cherche à avoir entre les deux électrodes d'un couple d'électrodes 51.1, 51.2 des moyens d'actionnement complémentaires 51, un milieu diélectrique de permittivité aussi forte que possible. Un liquide diélectrique à permittivité élevée comme, par exemple, le carbonate de propylène, de l'eau pure, un liquide d'indice, une huile optique telle que les huiles silicones conviendrait mieux. Mais par contre, on perd en saut d'indice, puisque le premier fluide 4.1 et le second fluide 4.2, qui sont tous les deux des liquides, auront des indices absolus de réfraction plus proches. La puissance optique du dispositif optique sera affaiblie. Pour limiter cet effet négatif, il est préférable de choisir comme second fluide 4.2 un liquide qui possède un indice absolu de réfraction inférieur à celui du premier fluide 4.1 qui lui aussi est liquide.

En conclusion, plus la différence est élevée entre les indices absolus de réfraction du premier fluide et du second fluide, plus le dispositif optique aura une puissance optique élevée, toutes choses étant égales par ailleurs. Le meilleur compromis reste, du point de vue optique, de choisir comme second fluide 4.2 de l'air. Si le second fluide 4.2 est un liquide, on cherche à ce qu'il ait une densité aussi proche que possible de celle du premier fluide 4.1 afin de limiter les effets de la pesanteur sur les performances optiques du dispositif optique. Cela permet aussi d'améliorer la tenue aux chocs. Bien sûr ce choix de densités aussi proches que possible n'est pas indispensable.

Le second fluide 4.2 que ce soit un liquide ou un gaz, peut être libre de circuler hors de la cavité 6 délimitée entre le capot 10 et la membrane 2. On se réfère à la figure 4A. Un réservoir 61 contenant le second fluide 4.2 communique par un conduit 62 avec l'intérieur de la cavité 6 délimitée par le capot 10 et la membrane 2.

Le second fluide 4.2 peut librement passer du réservoir 61 à la cavité 6 et vice versa en fonction de la déformation ou de la non déformation de la membrane 2.

La circulation du second fluide 4.2 permet d'éviter la mise sous pression de la cavité 6 et les risques de fuite associés, cette augmentation peut être induite, par exemple, par une montée en température du dispositif optique.

Par contre, si le second fluide 4.2, prenant toujours la forme d'un liquide considéré comme incompressible, est emprisonné dans la cavité 6 limitée par le capot 10 et la membrane 2, un autre effet bénéfique apparaît. En effet, lors du déplacement de la zone centrale 2.1 de la membrane 2 vers le capot 10, le second fluide 4.2 chassé vers la périphérie de la membrane 2, induit un déplacement de la zone périphérique 2.2 de la membrane 2 vers le support 1.5 et donc amplifie l'action des moyens d'actionnement principaux 50 pour déformer la zone périphérique 2.2 de la membrane 2. On peut se référer à la figure 4B. Sur les deux figures 4A, 4B, les flèches zébrées montrent le déplacement du premier fluide 4.1 et du second fluide 4.2.

Les figures précédentes montraient des dispositifs optiques unitaires comportant une seule membrane 2. Il est bien sûr possible que le dispositif optique, objet de l'invention, comporte plusieurs membranes 2 solidaires d'un même support 1.5 comme illustré sur la figure 5A. Dans cette variante, chaque membrane 2 se trouve dans une cavité 6 qui lui est propre délimitée par un capot 10, tous les capots étant reliés les uns aux autres. Les membranes 2 peuvent être agencées sur le support 1.5 en barrette ou en matrice par exemple. Sur la figure 5A, on a seulement schématisé les moyens d'actionnement principaux 50 dans un souci de clarté. Dans un tel dispositif, les différentes membranes 2 peuvent être déformées de manière indépendante. Il est à noter que le dispositif optique de la figure 5A peut être utilisé tel quel ou bien être ultérieurement découpé en dispositifs optiques unitaires, chacun ayant une seule membrane 2. Les traits parallèles verticaux schématisent des traits de scie conduisant à la séparation des dispositifs optiques pour les rendre unitaires.

Sur la figure 5A, on n'a pas non plus représenté de contacts électriques qui doivent être accessibles de l'extérieur pour l'alimentation électrique des moyens d'actionnement. Il n'est pas utile de surcharger les figures inutilement, car les techniques utilisées pour faire un tel dispositif optique par lots sont des techniques parfaitement connues de l'homme du métier de la microélectronique et des microsystèmes.

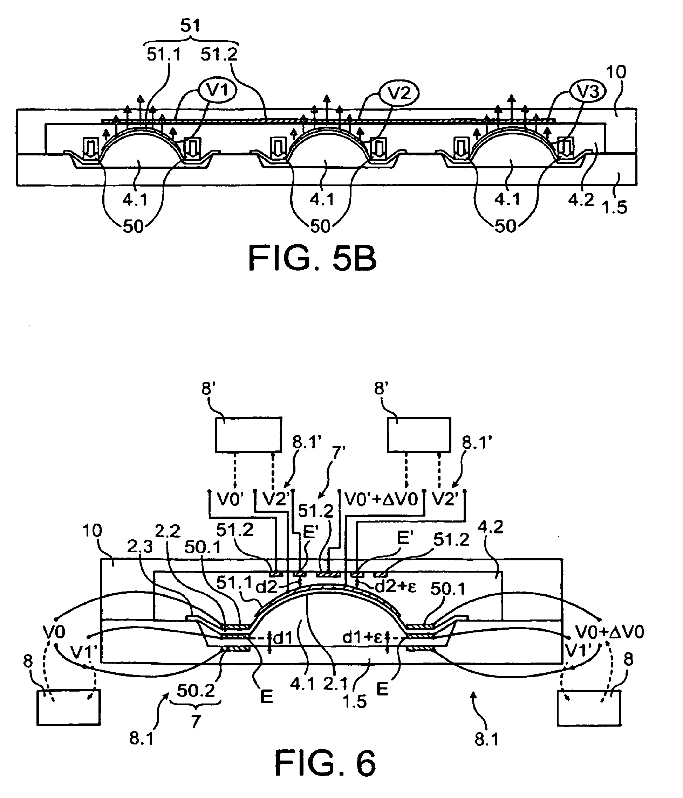

Sur la figure 5B, on a représenté une variante du dispositif optique selon l'invention avec plusieurs membranes 2. Maintenant les membranes 2 sont toutes placées dans une même cavité 6 délimitée par un unique capot 10. Le second fluide 4.2 baigne toutes les membranes 2. Par contre chaque membrane 2 est scellée sur le support 1.5 commun et emprisonne une quantité de premier fluide 4.1 qui lui est propre. Les moyens d'actionnement complémentaires 51 de la zone centrale 2.1 de chaque membrane 2 comportent une électrode propre au niveau de chaque membrane 2 et une unique électrode au niveau du capot 10, cette unique électrode est commune à tous les moyens d'actionnement complémentaires 51. Les membranes 2 peuvent être déformées de manière distincte et indépendante les unes des autres. Les moyens d'actionnement complémentaires 51 peuvent être actionnés séparément comme on l'a suggéré en appliquant des tensions différentes V1, V2, V3 aux différents moyens d'actionnement complémentaires 51. Il en est de même pour les moyens d'actionnement principaux 50. Il est bien entendu que toutes les membranes 2 peuvent être déformées de la même manière si les moyens d'actionnement principaux 50 d'une part et les moyens d'actionnement complémentaires 51 d'autre part associés à chaque membrane 2 sont activés ensemble de la même manière.

On peut prévoir, au niveau des moyens d'actionnement principaux 50, des moyens d'asservissement 8 de la tension à appliquer aux moyens d'actionnement principaux 50 en fonction de l'épaisseur d1 de premier fluide se trouvant respectivement sous la membrane 2 au niveau de la partie sollicitée de la zone périphérique 2.2 par les moyens d'actionnement principaux 50.

Les moyens d'asservissement 8 coopèrent avec des moyens de mesure 8.1 capacitifs de l'épaisseur de premier fluide, disposés en plusieurs endroits au niveau de la partie sollicitée de la zone périphérique 2.2. Les moyens de mesure 8.1 peuvent comporter plusieurs couples 7 d'électrodes répartis au niveau de la partie sollicitée. Il est possible qu'au moins une électrode d'un couple 7 des moyens de mesure 8.1 soit confondue avec une électrode des moyens d'actionnement principaux 50. Dans l'exemple de la figure 6, l'électrode fixe 50.2 des moyens d'actionnement principaux 50 est aussi une électrode des moyens de mesure 8.1. L'autre électrode E d'un couple 7 des moyens de mesure 8.1 est située sur la membrane 2, côté premier fluide 4.1. En variante, il est possible que les deux électrodes d'un couple 7 soient confondues avec les deux électrodes d'un actionneur des moyens d'actionnement principaux. Encore une autre configuration serait de dissocier actionneur des moyens d'actionnement principaux 50 et couple 7 d'électrodes des moyens de mesure 8.1. En appliquant une différence de potentiel V1' sur les deux électrodes 50.2, E de chaque couple 7 d'électrodes 50.2, E et en mesurant la capacité sur chaque couple 7 d'électrodes 50.2, E, on acquiert au niveau de chacun des couples 7 d'électrodes 50.2, E la quantité de premier fluide 4.1 se trouvant entre les électrodes 50.2, E et donc l'épaisseur d1 de premier fluide 4.1 entre la membrane 2 et le fond 3.1 de la cuvette 3.

Sur la figure 6, on n'a fait que schématiser les moyens d'asservissement 8, de plus on ne les voit que pour deux couples d'électrodes 50.2, E et deux actionneurs des moyens d'actionnement principaux 50 pour ne pas surcharger la figure.

Lors du fonctionnement du dispositif optique objet de l'invention, si on obtient des mesures capacitives qui diffèrent d'un endroit à un autre, par exemple d1, d1+ε, les moyens d'asservissement 8 reçoivent les mesures capacitives des moyens de mesure 8.1, les comparent à une valeur de référence qui correspond ici à l'espacement d1 mesuré par ailleurs, et commandent qu'une tension supplémentaire de correction ΔV0, en plus de la tension de référence V0, soit appliquée aux actionneurs correspondants des moyens d'actionnement principaux 50, aux endroits où la mesure capacitive diffère de la valeur de référence. On uniformise ainsi toutes les mesures capacitives à la valeur de référence et donc toutes les distances entre la membrane 2 et le fond 3.1 de la cuvette 3, en ajustant les tensions d'alimentation des actionneurs des moyens d'actionnement principaux 50.

Le parallélisme nécessaire au bon fonctionnement de la lentille ou du miroir est ainsi garanti par un asservissement en déplacement. Cet asservissement ne pose pas de problème à l'homme du métier.

Lorsque l'on souhaite faire varier la distance focale du dispositif optique, on applique une tension V0 sur tous les actionneurs des moyens d'actionnement principaux 50 comme représenté sur la figure 6, on mesure grâce aux moyens de mesure 8.1, l'espace d1 entre la membrane 2 et le fond 3.1 de la cuvette 3, les mesures sont délivrées aux moyens d'asservissement 8. Si un ou plusieurs couples 7 d'électrodes 50.2, E détecte un décalage parasite ε, les moyens d'asservissement 8 commandent l'application de la tension supplémentaire de correction ΔV0 à un ou plusieurs actionneurs des moyens d'actionnement principaux 50 les plus proches des couples 7 d'électrodes ayant détecté le décalage parasite ε. La tension d'alimentation supplémentaire de correction ΔV0 appliquée à un ou plusieurs actionneurs des moyens d'actionnement principaux 50 fait qu'ils déplacent localement la membrane 2 pour que le décalage ε s'annule.

Il est bien sûr possible de prévoir, de manière similaire, des moyens d'asservissement 8' de la tension V0' à appliquer aux moyens d'actionnement complémentaires 51 en fonction de l'épaisseur d2 de second fluide se trouvant respectivement entre la membrane 2 et le capot 10 au niveau de la partie sollicitée de la zone centrale 2.1 par les moyens d'actionnement complémentaires 51. Les moyens d'asservissement 8' coopèrent avec des moyens de mesure 8.1' capacitifs de l'épaisseur de second fluide 4.2, disposés en plusieurs endroits au niveau de la partie sollicitée de la zone centrale 2.1. Les moyens de mesure 8.1' peuvent comporter plusieurs couples 7' d'électrodes 51.1, E' répartis au niveau de la partie sollicitée. On suppose que l'une des deux électrodes 51.1 d'un couple est confondue avec une électrode d'un actionneur des moyens d'actionnement complémentaires 51. Dans l'exemple, il s'agit de l'électrode mobile 51.1 se trouvant sur la membrane 2. L'autre électrode E' d'un couple 7' est en vis-à-vis portée par le capot 10. La tension à appliquer aux moyens de mesure capacitifs 8.1' est appelée V2' et la tension supplémentaire de correction ΔV0', elle s'ajoute à la tension V0' appliquée aux moyens d'actionnement complémentaires dans la mesure où une épaisseur d2+ ε' de second fluide 4.2 est mesurée.

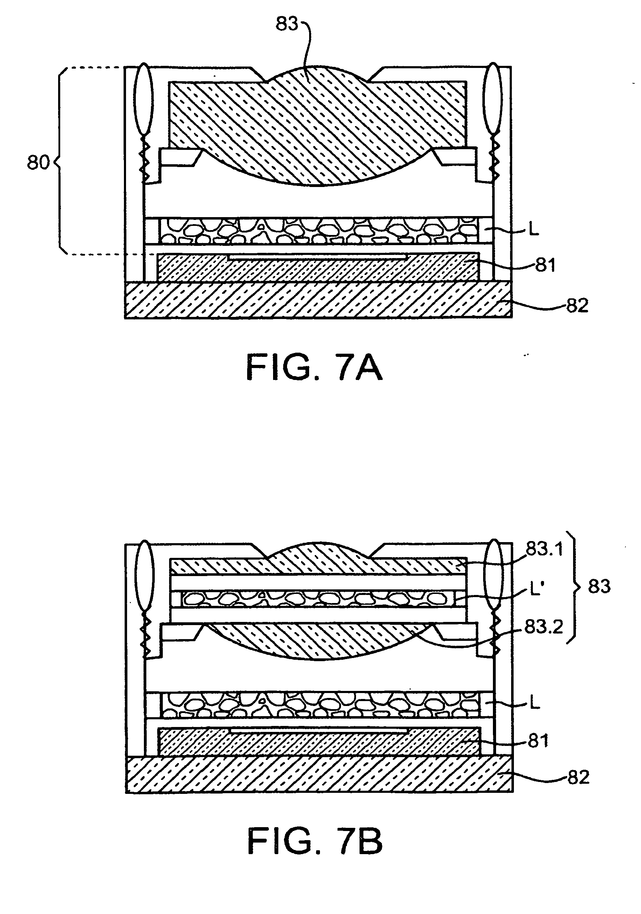

Un tel dispositif optique à distance focale variable peut être employé dans un dispositif de prise de vue notamment celui d'un appareil photo de téléphone portable. On se réfère à la figure 7A. Un tel dispositif de prise de vue comporte en cascade, un objectif 80 incluant au moins un dispositif optique à distance focale variable L selon l'invention de type lentille liquide par exemple, un capteur d'image 81 par exemple de type CCD ou CMOS porté par un substrat 82. Dans l'exemple décrit, l'objectif 80 comporte au moins une lentille 83 à distance focale fixe et une lentille liquide L selon l'invention. Par la suite cette lentille à distance focale fixe 83 sera appelée bloc optique conventionnel. La lentille liquide L se trouve entre le bloc optique conventionnel 83 et le capteur d'image 81. En variante le bloc optique conventionnel 83 peut se trouver entre la lentille liquide L et le capteur d'image 81. Le bloc optique conventionnel 83 est statique. Comme on l'a vu précédemment, de par son procédé de fabrication, la lentille liquide L peut être assimilée à un MOEMS (microsystème optoélectromécanique). La lentille liquide L à focale variable est placée à une certaine distance, qui dépend des caractéristiques de l'objectif 80, du capteur d'image 81, mais si cette distance est petite, la lentille liquide L et le capteur d'image 81 ne pourront faire qu'un seul composant en les intégrant soit en technologie AIC (abréviation anglo-saxonne de Above Integrated Circuit pour au-dessus du circuit inégré), soit en technologie WLCSP (abréviation anglo-saxonne de Wafer Level Chip Scale Package soit sur tranche à l'échelle de la puce). La distance focale de la lentille liquide L est adaptée en optimisant la pression du liquide au repos, mais aussi la courbure de la membrane au repos et l'indice de réfraction du liquide.

Si le dispositif de prise de vue inclut également la fonction zoom comme sur la figure 7B, on utilisera, un bloc optique 83 avec au moins deux lentilles à distance focale fixe 83.1, 83.2 et deux lentilles liquides L et L' dont l'une se trouve entre les deux lentilles 83.1, 83.2 du bloc optique 83 et l'autre à proximité du capteur d'image 81 comme sur la figure 7B.

Sur les figures 7A, 7B, le dispositif optique selon l'invention L, L' a été intégré à un composant optique tel un dispositif de prise de vue. Il a été placé en aval du bloc optique 83 (figures 7A, 7B) ou a été placé au sein du bloc optique 83 (figure 7B). Il est bien sûr possible de le placer en amont du bloc optique. Cette variante n'est toutefois pas illustrée pour ne pas multiplier inutilement le nombre de figures.

Bien que plusieurs modes de réalisation de la présente invention aient été représentés et décrits de façon détaillée, on comprendra que différents changements et modifications puissent être apportés sans sortir du cadre de l'invention. Il est notamment possible de changer la nature des moyens d'actionnement qu'ils soient principaux ou complémentaires.

## Revendications

1. Dispositif optique comportant au moins une membrane (2) déformable, un support (1.5), et des moyens d'actionnement (50, 51) destinés à solliciter la membrane (2) pour la déformer, la membrane (2) étant dotée d'une seule zone d'ancrage (2.3) sur le support (1.5) et d'une zone sensiblement centrale (2.1) apte à se déformer de manière réversible entourée par la zone d'ancrage (2.3), **caractérisé en ce que** le support (1.5) et la membrane (2) contribuent à emprisonner un volume constant d'un fluide (4.1), dit premier fluide, en contact avec une des faces de la membrane (2), ce volume constant étant situé au niveau de l'intérieur de la zone d'ancrage (2.3) par rapport à la membrane et **en ce que** les moyens d'actionnement de la membrane comportent des moyens d'actionnement principaux (50) aptes à solliciter la membrane dans une zone périphérique (2.2) comprise entre la zone centrale (2.1) et la zone d'ancrage (2.3) de manière à la déplacer dans un sens et des moyens d'actionnement complémentaires (51) ancrés au moins à la zone centrale (2.1) de la membrane aptes à solliciter la membrane (2) dans la zone centrale (2.1) pour toujours la déplacer en sens inverse, les moyens d'actionnement principaux et complémentaires permettant de déplacer le premier fluide, à volume constant, vers la zone centrale (2.1) ou inversement.

2. Dispositif optique selon la revendication 1 comportant en outre un capot (10) en regard de la membrane (2).

3. Dispositif optique selon l'une des revendications 1 ou 2, dans lequel les moyens d'actionnement principaux (50) sont formés d'au moins un actionneur de type électrostatique, piézoélectrique, bimorphe thermique, magnétique.

4. Dispositif optique selon la revendication 3, dans lequel lorsque les moyens d'actionnement principaux (50) comportent au moins un actionneur électrostatique, cet actionneur électrostatique comporte deux électrodes (50.1, 50.2) en vis-à-vis séparées par un diélectrique avec une électrode fixe (50.2) au niveau du support (1.5) et une électrode mobile (50.1) au niveau de la membrane (2).

5. Dispositif optique selon l'une des revendications 1 à 4, dans lequel les moyens d'actionnement complémentaires (51) comportent au moins un actionneur électrostatique formé de deux électrodes (51.1, 51.2) en vis-à-vis séparées par un diélectrique avec une électrode mobile (51.1) au niveau de la membrane et une électrode fixe (51.2) au niveau d'un autre support tel qu'un capot (10) de protection de la membrane (2) fixé au support (1.5).

6. Dispositif optique selon la revendication 5, dans lequel lorsque les moyens d'actionnement complémentaires (1) comportent plusieurs actionneurs électrostatiques, les électrodes fixes (51.2) et/ou les électrodes mobiles (51.1) des actionneurs sont agencées de manière concentrique autour d'un axe optique du dispositif optique.

7. Dispositif optique selon l'une des revendications 3 à 6, dans lequel une électrode fixe (51.2, 50.2) ou une électrode mobile (50.1, 51.1) est commune à plusieurs actionneurs appartenant aux moyens d'actionnement principaux (50) et/ou aux moyens d'actionnement complémentaires (51).

8. Dispositif optique selon l'une des revendications 3 à 7, dans lequel une électrode mobile (50.1, 51.1) des moyens d'actionnement principaux (50) et/ou des moyens d'actionnement complémentaires (51) se trouve sur une des faces de la membrane (2), est en sandwich entre deux sous-couches (2a, 2b) de la membrane ou est formée par la membrane (2) elle-même.

9. Dispositif optique selon l'une des revendications 3 à 8, dans lequel une électrode mobile (50.1) des moyens d'actionnement principaux (50) et une électrode mobile (51.1) des moyens d'actionnement complémentaires (51) sont confondues.

10. Dispositif optique selon l'une des revendications 3 à 8, dans lequel une électrode mobile (51.1) des moyens d'actionnement principaux (50) et une électrode mobile (51.1) des moyens d'actionnement complémentaires (51) sont reliées électriquement par au moins une extension (60) électriquement conductrice.

11. Dispositif optique selon l'une des revendications 2 à 10, dans lequel le capot (10) délimite une cavité (6) emplie d'un second fluide (4.2).

12. Dispositif optique selon l'une des revendications 1 à 4, dans lequel les moyens d'actionnement complémentaires sont piézoélectriques.

13. Dispositif optique selon l'une des revendications 1 à 12, dans lequel les moyens d'actionnement complémentaires comportent une partie située à l'extérieur du volume du premier fluide.

14. Dispositif optique selon l'une des revendications 1 ou 11, comportant en outre des moyens d'asservissement (8) d'une tension à appliquer aux moyens d'actionnement principaux (50) en fonction de l'épaisseur (d1) de premier fluide (4.1) au voisinage des moyens d'actionnement principaux (50) et/ou des moyens d'asservissement (8') d'une tension à appliquer aux moyens d'actionnement complémentaires (51) en fonction de l'épaisseur (d2) de second fluide (4.2) au voisinage des moyens d'actionnement complémentaires (51).

15. Dispositif optique selon l'une des revendications 2 à 14, dans lequel le capot (10) protège plusieurs membranes (2).

16. Dispositif optique selon la revendication 15, dans lequel le capot (10) porte une électrode fixe (51.2) commune à plusieurs moyens d'actionnement complémentaires (51) chacun sollicitant une membrane (2) différente.

17. Dispositif de prise de vue, **caractérisé en ce qu'**il comporte au moins un dispositif optique selon l'une des revendications 1 à 16.

## Patentansprüche

1. Optische Vorrichtung, umfassend wenigstens eine verformbare Membran (2), einen Träger (1.5) sowie Betätigungsmittel (50, 51), die dazu ausgelegt sind, die Membran (2) zu beaufschlagen, um sie zu verformen, wobei die Membran (2) mit einer einzigen Zone zur Befestigung (2.3) am Träger (1.5) versehen ist sowie mit einer im wesentlichen zentralen Zone (2.1), die sich in reversibler Weise verformen kann und von der Befestigungszone (2.3) umgeben ist, **dadurch gekennzeichnet, dass** der Träger (1.5) und die Membran (2) dazu beitragen, ein konstantes Volumen eines Fluids (4.1) einzuschließen, genannt erstes Fluid, das in Kontakt mit einer der Seiten der Membran (2) ist, wobei dieses konstante Volumen im Bereich des Innern der Befestigungszone (2.3) bezogen auf die Membran gelegen ist, und dass die Betätigungsmittel für die Membran Hauptbetätigungsmittel (50) umfassen, die dazu ausgelegt sind, die Membran in einer Umfangszone (2.2) zu beaufschlagen, welche zwischen der zentralen Zone (2.1) und der Befestigungszone (2.3) enthalten ist, derart, dass sie in einer Richtung verlagert wird, sowie Ergänzungsbetätigungsmittel (51), die wenigstens an der zentralen Zone (2.1) der Membran befestigt und dazu ausgelegt sind, die Membran (2) in der zentralen Zone (2.1) zu beaufschlagen, um sie stets in der entgegengesetzten Richtung zu verlagern, wobei die Haupt- und die Ergänzungsbetätigungsmittel es erlauben, das erste Fluid mit konstantem Volumen zur zentralen Zone (2.1) hin oder entgegengesetzt zu verlagern.

2. Optische Vorrichtung nach Anspruch 1, ferner umfassend einen der Membran (2) gegenüberliegenden Deckel (10).

3. Optische Vorrichtung nach einem der Ansprüche 1 oder 2, bei der die Hauptbetätigungsmittel (50) mit wenigstens einem Betätigungselement vom elektrostatischen, piezoelektrischen, bimorph-thermischen oder magnetischen Typ gebildet sind.

4. Optische Vorrichtung nach Anspruche 3, bei der dann, wenn die Hauptbetätigungsmittel (50) wenigstens ein elektrostatisches Betätigungselement umfassen, dieses elektrostatische Betätigungselement zwei gegenüberliegende Elektroden (50.1, 50.2) umfasst, die durch ein Dielektrikum getrennt sind, mit einer festen Elektrode (50.2) im Bereich des Trägers (1.5) und einer beweglichen Elektrode (50.1) im Bereich der Membran (2).

5. Optische Vorrichtung nach einem der Ansprüche 1 bis 4, bei der die Ergänzungsbetätigungsmittel (51) wenigstens ein elektrostatisches Betätigungselement umfassen, das mit zwei gegenüberliegenden Elektroden (51.1, 51.2) gebildet ist, die durch ein Dielektrikum getrennt sind, mit einer beweglichen Elektrode (51.1) im Bereich der Membran und einer festen Elektrode (51.2) im Bereich eines anderen Trägers wie z.B. eines am Träger (1.5) befestigten Deckels (10) zum Schutz der Membran (2).

6. Optische Vorrichtung nach Anspruch 5, bei der dann, wenn die Ergänzungsbetätigungsmittel (1) mehrere elektrostatische Betätigungselemente umfassen, die festen Elektroden (51.2) und/oder die beweglichen Elektroden (51.1) der Betätigungselemente in konzentrischer Weise um eine optische Achse der optischen Vorrichtung herum angeordnet sind.

7. Optische Vorrichtung nach einem der Ansprüche 3 bis 6, bei der eine feste Elektrode (51.2, 50.2) oder eine bewegliche Elektrode (50.1, 51.1) mehreren Betätigungselementen gemein ist, die zu den Hauptbetätigungsmitteln (50) und/oder zu den Ergänzungsbetätigungsmittel (51) gehören.

8. Optische Vorrichtung nach einem der Ansprüche 3 bis 7, bei der eine bewegliche Elektrode (50.1, 51.1) der Hauptbetätigungsmittel (50) und/oder der Ergänzungsbetätigungsmittel (51) sich an einer der Seiten der Membran (2) befindet und sandwichartig eingeschlossen ist zwischen zwei Teilschichten (2a, 2b) der Membran oder durch die Membran (2) selbst gebildet ist.

9. Optische Vorrichtung nach einem der Ansprüche 3 bis 8, bei der eine bewegliche Elektrode (50.1) der Hauptbetätigungsmittel (50) und eine bewegliche Elektrode (51.1) der Ergänzungsbetätigungsmittel (51) zusammengelegt sind.

10. Optische Vorrichtung nach einem der Ansprüche 3 bis 8, bei der eine bewegliche Elektrode (51.1) der Hauptbetätigungsmittel (50) und eine bewegliche Elektrode (51.1) der Ergänzungsbetätigungsmittel (51) elektrisch mittels wenigstens einer elektrisch leitenden Verlängerung (60) verbunden sind.

11. Optische Vorrichtung nach einem der Ansprüche 2 bis 10, bei der der Deckel (10) einen Hohlraum (6) begrenzt, der mit einem zweiten Fluid (4.2) gefüllt ist.

12. Optische Vorrichtung nach einem der Ansprüche 1 bis 4, bei der die Ergänzungsbetätigungsmittel piezoelektrisch sind.

13. Optische Vorrichtung nach einem der Ansprüche 1 bis 12, bei der die Ergänzungsbetätigungsmittel einen Teil umfassen, der außerhalb des Volumens des ersten Fluids gelegen ist.

14. Optische Vorrichtung nach einem der Ansprüche 1 oder 11, ferner umfassend Mittel (8) zur Steuerung einer Spannung, die an die Hauptbetätigungsmittel (50) anzulegen ist, als Funktion der Dicke (d1) des ersten Fluids (4.1), in der Nähe der Hauptbetätigungsmittel (50), und/oder Mittel (8') zur Steuerung einer Spannung, die an die Ergänzungsbetätigungsmittel (51) anzulegen ist, als Funktion der Dicke (d2) des zweiten Fluids (4.2), in der Nähe der Ergänzungsbetätigungsmittel (51).

15. Optische Vorrichtung nach einem der Ansprüche 2 bis 14, bei der der Deckel (10) mehrere Membranen (2) schützt.

16. Optische Vorrichtung nach Anspruch 15, bei der der Deckel (10) eine feste Elektrode (51.2) trägt, die mehreren Ergänzungsbetätigungsmitteln (51) gemein ist, von denen jedes eine andere Membran (2) beaufschlagt.

17. Bildaufnahmevorrichtung, **dadurch gekennzeichnet, dass** sie wenigstens eine optische Vorrichtung nach einem der Ansprüche 1 bis 16 umfasst.

## Claims

1. Optical device comprising at least one deformable membrane (2), a support (1.5), actuating means (50, 51) for loading the membrane (2) to deform it, the membrane (2) being provided with a single anchoring zone (2.3) to the support (1.5) and a substantially central zone (2.1) suitable for deforming reversibly surrounded by the anchoring zone (2.3), **characterized in that** the support (1.5) and the membrane (2) contribute to imprison a constant volume of a fluid (4.1), called first fluid, in contact with one of the faces of the membrane (2), said constant volume being located in the interior of the anchoring zone (2.3) regarding the membrane and **in that** the membrane actuating means comprise main actuating means (50) suitable for loading the membrane in a peripheral zone (2.2) lying between the central zone (2.1) and the anchoring zone (2.3) in order to move it in a direction and supplementary actuating means (51) anchored at least to the central zone (2.1) of the membrane suitable for loading the membrane (2) in the central centrale (2.1) to always move it in the reverse direction, the main and supplementary actuating means allow the first fluid (4.1) to move towards the central zone (2.1) or vice versa.

2. Optical device according to Claim 1, further comprising a cover (10) opposite the membrane (2).

3. Optical device according to either of Claims 1 and 2, in which the main actuating means (50) are formed from at least one electrostatic, piezoelectric, thermal bimorph, magnetic actuator.

4. Optical device according to Claim 3, in which, when the main actuating means (50) comprise at least one electrostatic actuator, this electrostatic actuator comprises two electrodes (50.1, 50.2) facing one another separated by a dielectric with a fixed electrode (50.2) at the support (1.5) and a mobile electrode (50.1) at the membrane (2).

5. Optical device according to one of Claims 1 to 4, in which the supplementary actuating means (51) comprise at least one electrostatic actuator formed from two electrodes (51.1, 51.2) facing one another separated by a dielectric with a mobile electrode (51.1) at the membrane and a fixed electrode (51.2) at another support such as a cover (10) for protecting the membrane (2) fixed to the support (1.5).

6. Optical device according to Claim 5, in which, when the supplementary actuating means (1) comprise a plurality of electrostatic actuators, the fixed electrodes (51.2) and/or the mobile electrodes (51.1) of the actuators are arranged concentrically about an optical axis of the optical device.

7. Optical device according to one of Claims 3 to 6, in which a fixed electrode (51.2, 50.2) or a mobile electrode (50.1, 51.1) is common to a plurality of actuators belonging to the main actuating means (50) and/or to the supplementary actuating means (51).

8. Optical device according to one of Claims 3 to 7, in which a mobile electrode (50.1, 51.1) of the main actuating means (50) and/or of the supplementary actuating means (51) located on one of the faces of the membrane (2), is sandwiched between two sub-layers (2a, 2b) of the membrane or is formed by the membrane (2) itself.

9. Optical device according to one of Claims 3 to 8, in which a mobile electrode (50.1) of the main actuating means (50) and a mobile electrode (51.1) of the supplementary actuating means (51) are merged.

10. Optical device according to one of Claims 3 to 8, in which a mobile electrode (51.1) of the main actuating means (51.1) and a mobile electrode (51) of the supplementary actuating means (60) are electrically connected by at least one electrically conductive extension (60).

11. Optical device according to one of Claims 2 to 10, in which the cover (10) bounds a cavity (6) filled with a second fluid (4.2).

12. Optical device according to one of Claims 1 to 4, in which the supplementary actuating means are piezoelectric.

13. Optical device according to one of Claims 1 to 12, in which the supplementary actuating means comprise a portion located outside the volume of the first fluid.

14. Optical device according to either of Claims 1 and 11, further comprising means (8) for servocontrolling a voltage to be applied to the main actuating means (50) according to the thickness (d1) of the first fluid (4.1) in the neighbourhood of the main actuating means (50) and/or means (8') for servocontrolling a voltage to be applied to the supplementary actuating means (51) according to the thickness (d2) of the second fluid (4.2) in the neighbourhood of the supplementary actuating means (51).

15. Optical device according to one of Claims 2 to 14, in which the cover (10) protects a plurality of membranes (2).

16. Optical device according to Claim 15, in which the cover (10) carries a fixed electrode (51.2) common to a plurality of supplementary actuating means (51) each loading a different membrane (2).

17. Viewing device, **characterized in that** it comprises at least one optical device according to one of Claims 1 to 16.
